# EUROPEAN PATENT SPECIFICATION

(11) **EP 4 362 167 B1**
(45) Date of publication and mention of the grant of the patent: **03.09.2025**
(21) Application number: 23205153.2
(22) Date of filing: 23.10.2023
(51) Int. Cl.: H01M 10/48, H01M 50/204, H01M 10/627, H01M 10/6567, H01M 50/251

(54) **ENERGY STORAGE SYSTEM AND POWER SUPPLY SYSTEM**
ENERGIESPEICHERSYSTEM UND STROMVERSORGUNGSSYSTEM
SYSTÈME DE STOCKAGE D'ÉNERGIE ET SYSTÈME D'ALIMENTATION ÉLECTRIQUE

(30) Priority: 31.10.2022 CN 202211346277
(43) Date of publication of application: 01.05.2024
(73) Proprietor: Huawei Digital Power Technologies Co., Ltd., Shenzhen, Guangdong 518043 (CN)
(72) Inventor: MENG, Hao, Shenzhen, Guangdong 518043 (CN); ZHOU, Kui, Shenzhen, Guangdong 518043 (CN)
(74) Representative: Maiwald GmbH

(56) References cited:
- WO-A1-2022/155892
- CN-A- 112 208 949
- CN-A- 113 394 489
- CN-U- 211 789 153
- CN-U- 217 009 340
- US-A1- 2022 294 052

## Description

### TECHNICAL FIELD

This application relates to the field of power supply device technologies, and in particular, to an energy storage system and a power supply system.

### BACKGROUND

New energy technologies are vigorously developing worldwide, and various technologies related to energy storage are widely applied. A manner of using a container for energy storage is widely applied. Specifically, the container may be an energy storage system. One power supply system may include a plurality of energy storage systems.

The energy storage system may specifically include one or more battery racks. Each battery rack includes one or more battery packs. Each battery rack may be connected to one power converter. In a working process of the energy storage system, both the battery pack and the power converter generate heat, and working efficiency of the battery pack is low in a low-temperature environment. Therefore, the energy storage system further includes a temperature control system. The temperature control system is configured to control temperatures of the battery pack and the power converter. The temperature control system may reliably control the temperatures of the battery rack and the power converter, and is essential for normal working of the energy storage system.

WO 2022/155892 A1 describes an energy storage container and temperature control method.

CN 112 208 949 A describes an energy storage container.

CN 211 789 153 U describes an energy storage container.

CN 217 009 340 U describes an energy storage container.

US 2022/294052 A1 describes battery module having structure into which cooling water can be introduced when thermal runaway phenomenon occurs.

CN 113 394 489 A describes a temperature control device.

### SUMMARY

This application provides an energy storage system and a power supply system, to independently control a temperature of each part of battery racks. This helps improve heat dissipation efficiency, reduce energy waste, and reduce losses.

The present invention is defined by the subject-matter of the independent claims. Additional features of the invention are presented in the dependent claims.

According to a first aspect, this application provides an energy storage system. The energy storage system includes N battery racks and at least two temperature control systems. Each battery rack includes a plurality of battery packs. The plurality of battery packs are connected in series, or the plurality of battery packs are connected in parallel. Each battery rack can independently perform charging and discharging. The at least two temperature control systems are configured to control temperatures of the N battery racks. There are two temperature control systems in the at least two temperature control systems. The two temperature control systems are configured to respectively control temperatures of two different battery racks of the plurality of battery racks. Herein, N is an integer greater than or equal to 2. In this embodiment, different temperature control systems are independently disposed. In this way, each independent temperature control system has a simpler structure, and can be conveniently replaced and maintained. In this solution, a quantity of temperature control systems in the energy storage system may also be increased, to reduce a probability that the entire energy storage system cannot work. When temperature control needs to be performed for a battery rack, only a corresponding temperature control system of the battery rack needs to be controlled to work or to improve a heat dissipation capability. This helps reduce power consumption of all the temperature control systems in the entire energy storage system and reduce energy waste. Alternatively, when a temperature control system is faulty, only normal working of a corresponding battery rack is affected, and a smaller quantity of battery racks are affected, thereby reducing losses.

In a further technical solution, each battery rack is connected to one power converter. The power converter is electrically connected to N battery packs of a battery rack, to control charging and discharging, and the like of the entire battery rack.

The temperature control system is further configured to control a temperature of a power converter connected to the corresponding battery rack. This solution helps reduce the quantity of temperature control systems and a volume of the energy storage system.

A quantity of the at least two temperature control systems is N. The N temperature control systems are disposed in a one-to-one correspondence with the N battery racks. Each temperature control system is configured to control a temperature of a corresponding battery rack. In this solution, a temperature status of each battery rack may be controlled. This solution has higher flexibility.

In another technical solution, the at least two temperature control systems include N + 1 temperature control systems. Herein, N of the temperature control systems are disposed in a one-to-one correspondence with the N battery racks. Each temperature control system is configured to control a temperature of a corresponding battery rack. Herein, N power converters connected in a one-to-one correspondence with the N battery racks are centrally disposed, and the N+1thtemperature control system is configured to control temperatures of the N centrally disposed power converters. The battery pack and the power converter have different temperature requirements. Therefore, using different temperature control systems to perform targeted control helps save energy and improve temperature control effect.

The at least two temperature control systems include a first temperature control system and a second temperature control system. The N battery racks include a first part of battery racks and a second part of battery racks. Specifically, the first part of battery racks may include one or more battery racks, and the second part of battery racks may also include one or more battery racks. A quantity of battery racks included in the first part of battery racks may be the same as or different from a quantity of battery racks included in the second part of battery racks. This is not limited in this application.

The energy storage system further includes a temperature control and distribution component. The temperature control and distribution component is connected between the first temperature control system and the second temperature control system, to control a region in which the first temperature control system and the second temperature control system control temperatures. Specifically, when the temperature control and distribution component is in a first working state, the first temperature control system is configured to control a temperature of the first part of battery racks, and the second temperature control system is configured to control a temperature of the second part of battery racks, and the first temperature control system and the second temperature control system work independently. When the temperature control and distribution component is in a second working state, the first temperature control system is configured to control temperatures of the first part of battery racks and the second part of battery racks, and the temperatures of the two parts of battery racks are controlled by using one temperature control system. When the temperature control and distribution component is in a third working state, the second temperature control system is configured to control temperatures of the first part of battery racks and the second part of battery racks, and the temperatures of the two parts of battery racks are controlled by using the other temperature control system. In this technical solution, even if a temperature control system is faulty and cannot control a temperature of a corresponding battery rack, another temperature control system may be used to satisfy a temperature control requirement of the battery rack, to ensure normal working of the battery rack and ensure reliability of charging and discharging of the energy storage system. Therefore, the energy storage system is not likely to stop working, thereby reducing losses caused due to shutdown.

In an optional technical solution, the temperature control system may be a liquid cooling system, or may be an air cooling system, provided that the temperature control system can perform temperature control.

In a specific technical solution, the energy storage system includes a box. The N battery racks are disposed in the box. The box includes a door plate and a fixed wall. The door plate may be rotatably disposed on the fixed wall. The at least two temperature control systems are disposed on an inner side of the door plate, so that the temperature control systems can move with rotation of the door plate. When the temperature control systems need to be maintained, the door plate may be opened for operation, thereby simplifying operation steps.

In another specific technical solution, a rotating support is disposed inside the box. The at least two temperature control systems are disposed on the rotating support. Specifically, the rotating support may be disposed near a door of the energy storage system. When the door of the energy storage system is opened, the rotating support may rotate from the door towards the outside of the energy storage system. This can also help maintain the temperature control systems.

The energy storage system may further include a controller. The controller is connected to all the power converters and all the temperature control systems, and is configured to control working of the power converters and the temperature control systems. In this solution, one controller can be used to control the entire energy storage system. This helps perform coordination and cooperation and reduce a quantity of controllers.

According to a second aspect, this application further provides a power supply system. The power supply system includes a power distribution device and at least one energy storage system according to the first aspect. The power distribution device is electrically connected to the energy storage system and is further electrically connected to a user equipment. The power distribution device is configured to process electricity in the energy storage system and then distribute the processed electricity to the user for use. In this embodiment, the energy storage system in the power supply system uses different temperature control systems to dissipate heat for different battery racks. This helps reduce power consumption of the temperature control systems and reduce energy waste. When a temperature control system is faulty, only normal working of a corresponding battery rack is affected, and a smaller quantity of battery racks are affected, thereby reducing losses.

In a specific technical solution, a specific form of the power supply system is not limited. For example, the power supply system may be a large power station, or a micro power station. The micro power station may be specifically located in an industrial park or a residential district. Alternatively, the power supply system may be a home power supply system or a power supply system of devices such as a vehicle.

### BRIEF DESCRIPTION OF DRAWINGS

FIG. 1 is a schematic diagram of a structure of an energy storage system;
FIG. 2 is a schematic diagram of a structure of an energy storage system according to an embodiment of this application;
FIG. 3 is another schematic diagram of a structure of an energy storage system according to an embodiment of this application;
FIG. 4 is another schematic diagram of a structure of an energy storage system according to an embodiment of this application; and
FIG. 5 is another schematic diagram of a structure of an energy storage system according to an embodiment of this application.

### Reference numerals:

1: battery rack; 11: battery pack;
12: first part of battery racks; 13: second part of battery racks;
2: power converter; 3: temperature control system;
31: first temperature control system; 311: first driving apparatus;
32: second temperature control system; 321: second driving apparatus;
33: liquid pipeline; 331: first liquid branch;
332: second liquid branch; 333: first liquid pipeline;
334: second liquid pipeline; 34: driving apparatus;
341: first liquid inlet; 342: first liquid outlet;
343: second liquid inlet; 344: second liquid outlet;
4: temperature control and distribution component; 5: box;
51: door plate; 52: fixed wall.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "a specific embodiment", or the like described in this specification indicates that one or more embodiments of this application include a specific feature, structure, or characteristic described with reference to embodiments. The terms "include", "comprise", and "have", and their variants all mean "include but are not limited to", unless otherwise specifically emphasized in another manner.

To facilitate understanding of an energy storage system and a power supply system provided in embodiments of this application, the following first describes an application scenario of the energy storage system and the power supply system.

With rapid development of energy storage devices, an application range of an energy storage system becomes increasingly wide. The energy storage system is a highly integrated energy storage apparatus. The energy storage system includes a plurality of battery racks. The battery rack includes a plurality of battery packs. The battery rack is connected to an external device through a small quantity of interfaces, and has features of high integration, a small occupied area, and good scalability. The battery rack is an important part of development of distributed energy resources, a smart grid, and an Internet of energy in a power supply system. When the energy storage system works, ensuring that the battery packs work in an appropriate temperature environment is important to improvement of working efficiency of the battery packs.

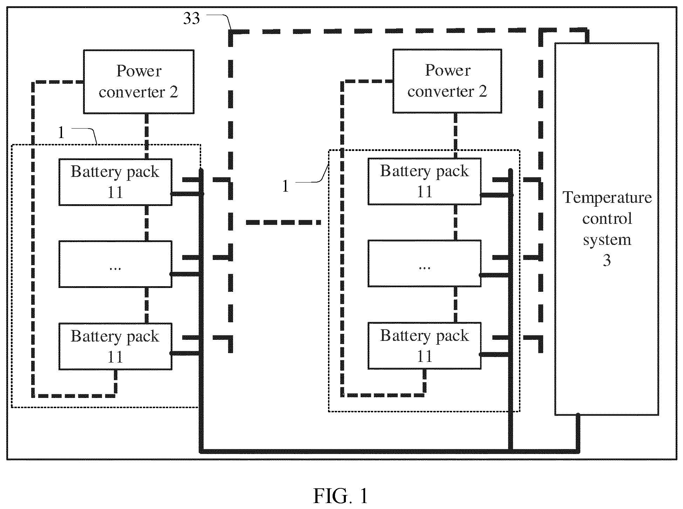

FIG. 1 is a schematic diagram of a structure of an energy storage system. As shown in FIG. 1, the energy storage system includes N battery racks 1. Herein, N is an integer greater than or equal to 2. FIG. 1 shows only two battery racks 1. Each battery rack 1 includes a plurality of battery packs 11. In a specific technical solution, the energy storage system may further include power converters 2. The power converter 2 is connected to a battery pack 11 of the battery rack 1, to control charging and discharging of the battery pack 11, adjust power, and the like. The battery rack 1 may work independently, and is a unit that independently implements charging and discharging functions.

As shown in FIG. 1, in the conventional technology, the energy storage system includes one temperature control system 3. The temperature control system 3 is configured to control temperatures of each battery rack 1 and each power converter 2. In other words, the temperature control system 3 is used to control temperatures of all the battery racks 1 and the power converters 2 in the entire energy storage system. In this solution, when the temperature control system 3 is faulty, the entire energy storage system loses a temperature control capability, and the entire energy storage system cannot work normally. However, when one or some of the N battery racks 1 are faulty, the temperature control system 3 continues to control a temperature of the faulty battery rack 1, and continues to work, thereby causing energy waste. In addition, the temperature control system 3 in this solution is relatively complex. It is relatively difficult to dispose and maintain the temperature control system 3.

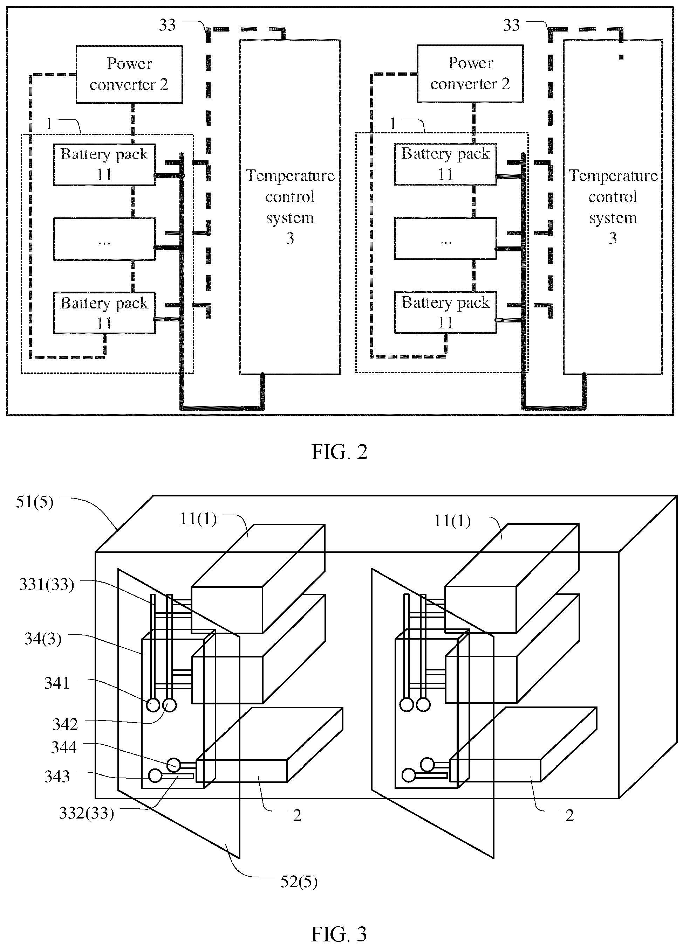

FIG. 2 is a schematic diagram of a structure of an energy storage system according to an embodiment of this application. FIG. 3 is another schematic diagram of a structure of an energy storage system according to an embodiment of this application. As shown in FIG. 2 and FIG. 3, the energy storage system provided in this application includes N battery racks 1 and at least two temperature control systems 3. In the figure, an example in which the energy storage system includes two battery racks 1 and two temperature control systems 3 is used. In actual application, the energy storage system may further include more battery racks 1 and more temperature control systems 3. In other words, N is an integer greater than or equal to 2. Each battery rack 1 includes N battery packs 11. The N battery packs 11 are connected in series or in parallel, to implement charging and discharging functions. The at least two temperature control systems 3 are configured to control temperatures of the N battery racks 1. Specifically, the at least two temperature control systems 3 include two temperature control systems 3. Each of the two temperature control systems 3 is configured to control temperatures of some battery racks 1. Specifically, the two temperature control systems 3 control temperatures of different battery racks of the battery racks 1. In this embodiment, different temperature control systems 3 are independently disposed. In this way, each independent temperature control system 3 has a simpler structure, and can be conveniently replaced and maintained. In this solution, a quantity of temperature control systems 3 in the energy storage system may also be increased, to reduce a probability that the entire energy storage system cannot work. When temperature control needs to be performed for a battery rack 1, only a corresponding temperature control system 3 of the battery rack 1 needs to be controlled to work or to improve a heat dissipation capability. This helps reduce power consumption of all the temperature control systems 3 in the entire energy storage system and reduce energy waste. Alternatively, when a temperature control system 3 is faulty, only normal working of a corresponding battery rack 1 is affected, and a smaller quantity of battery racks 1 are affected, thereby reducing losses.

In a specific embodiment, one temperature control system 3 may be enabled to control a temperature of one battery rack 1. To be specific, the energy storage system includes N temperature control systems 3, and the N temperature control systems 3 are disposed in a one-to-one correspondence with the N battery racks 1. In this solution, a temperature status of each battery rack 1 may be controlled. For example, when a battery rack 1 generates relatively high heat, only a corresponding temperature control system 3 of the battery rack 1 needs to be controlled to work or to improve a heat dissipation capability. Alternatively, when a battery rack 1 is started in a low-temperature environment and a temperature needs to be increased, a corresponding temperature control system of the battery rack 1 may be controlled to start. This helps further reduce power consumption of the temperature control system 3 and reduce energy waste. Alternatively, when a temperature control system 3 is faulty, only normal working of a corresponding battery rack 1 is affected, thereby better reducing losses.

In another embodiment, one temperature control system 3 may be further configured to control temperatures of two or more battery racks 1. This is not limited in this application.

Still with reference to FIG. 2, the energy storage system in this embodiment of this application further includes a power converter 2. Specifically, the energy storage system includes N power converters 2. Each battery rack 1 is connected to one power converter 2. The power converter 2 is electrically connected to the N battery packs 11 of the battery rack 1, to control charging and discharging, and the like of the entire battery rack 1.

In addition to controlling the temperature of the battery rack 1, the temperature control system 3 is further configured to control a temperature of the corresponding power converter 2 connected to the battery rack 1, to reduce the quantity of temperature control systems 3.

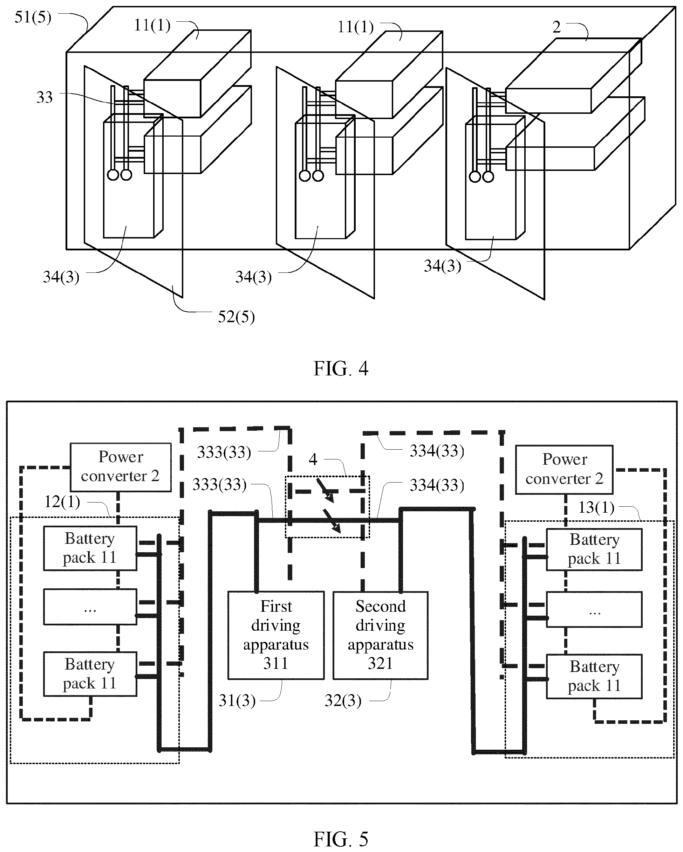

FIG. 4 is another schematic diagram of a structure of an energy storage system according to an embodiment of this application. As shown in FIG. 4, in another technical solution, N power converters 2 connected in a one-to-one correspondence with the N battery racks 1 in the energy storage system may be centrally disposed. The energy storage system may include N + 1 temperature control systems 3. Herein, N of the temperature control systems 3 are configured to control temperatures of the N battery racks 1, and the other temperature control system 3 is configured to control temperatures of the N centrally disposed power converters 2. A battery pack 11 and the power converter 2 generate different amounts of heat, and therefore have different heat dissipation requirements. In addition, when the battery pack 11 is started in a low-temperature environment, a temperature of the battery pack 11 further needs to be increased. Therefore, temperatures of the battery pack 11 and the power converter 2 may be separately controlled.

In addition, a size of the power converter 2 is smaller, and the N power converters 2 of the energy storage system may be centrally disposed. Certainly, all the N power converters 2 of the energy storage system may be centrally disposed, or some of the N power converters 2 may be centrally disposed. For example, the N power converters 2 are divided into two groups. Each group of power converters 2 are centrally disposed. One temperature control system 3 is used to control a temperature of each group of power converters 2. In other words, more than N + 1 temperature control systems may be included.

In another embodiment, when the temperature control systems 3 are not disposed in a one-to-one correspondence with the battery racks 1, the N power converters 2 may be centrally disposed, and a separate temperature control system 3 is used to control the temperatures of the power converters 2. In conclusion, in this embodiment of this application, temperature control may be performed for the battery racks 1 and the power converters 2 by using different temperature control systems 3.

FIG. 5 is another schematic diagram of a structure of an energy storage system according to an embodiment of this application. As shown in FIG. 5, in a specific embodiment, the N battery racks 1 in the energy storage system include a first part of battery racks 12 and a second part of battery racks 13. The at least two temperature control systems 3 include a first temperature control system 31 and a second temperature control system 32. The energy storage system further includes a temperature control and distribution component 4. The temperature control and distribution component 4 is connected between the first temperature control system 31 and the second temperature control system 32, and is configured to control working statuses of the first temperature control system 31 and the second temperature control system 32. When the temperature control distribution component 4 is in a first working state, the first temperature control system 31 is configured to control a temperature of the first part of the battery racks 12, and the second temperature control system 32 is configured to control a temperature of the second part of the battery racks 13. In other words, the first temperature control system 31 and the second temperature control system 32 respectively control the temperatures of the first part of the battery racks 12 and the second part of the battery racks 13. When the temperature control and distribution component 4 is in a second working state, the first temperature control system 31 is configured to control temperatures of the first part of the battery racks 12 and the second part of the battery racks 13. In other words, one first temperature control system 31 may be used to control the temperatures of the two parts of the battery racks: the first part of the battery racks 12 and the second part of the battery racks 13. When the temperature control and distribution component 4 is in a third working state, the second temperature control system 32 is configured to control temperatures of the first part of the battery racks 12 and the second part of the battery racks 13. In other words, one second temperature control system 32 may be used to control the temperatures of the two parts of the battery racks: the first part of the battery racks 12 and the second part of the battery racks 13.

In this embodiment, the temperature control system in the energy storage system may have various working modes. For example, when the temperature control and distribution component 4 is in the first working state, the first temperature control system 31 and the second temperature control system 32 work independently. Specifically, the first temperature control system 31 is configured to dissipate heat for the first part of the battery racks 12, and the second temperature control system 32 is configured to dissipate heat for the second part of the battery racks 13. When the temperature control and distribution component 4 is in the second working state, one first temperature control system 31 may be used to control the temperatures of the two parts of the battery racks: the first part of the battery racks 12 and the second part of the battery racks 13. For example, when the second temperature control system 32 is faulty, the second temperature control system 32 cannot control the temperature of the second part of the battery racks 13. In this case, the first temperature control system 31 may be used to control the temperatures of both the first part of the battery racks 12 and the second part of the battery racks 13, to ensure normal working of the second part of the battery racks 13. When the temperature control and distribution component 4 is in the third working state, one second temperature control system 32 may be used to control the temperatures of the two parts of the battery racks: the first part of the battery racks 12 and the second part of the battery racks 13. For example, when the first temperature control system 31 is faulty, the first temperature control system 31 cannot control the temperature of the first part of the battery racks 12. In this case, the second temperature control system 32 may be used to control the temperatures of both the first part of the battery racks 12 and the second part of the battery racks 13, to ensure that the first part of the battery racks 12 can also work normally. In this embodiment, even if a temperature control system 3 is faulty and cannot control a temperature of a corresponding battery rack 1, another temperature control system 3 may be used to satisfy a temperature control requirement of the battery rack 1, to ensure normal working of the battery rack 1 and ensure reliability of charging and discharging of the energy storage system. Therefore, the energy storage system is not likely to stop working, thereby reducing losses caused due to shutdown.

A liquid pipeline 33 in a heat conduction connection with the first part of the battery racks 12 is a first liquid pipeline 333. A liquid pipeline 33 in a heat conduction connection with the second part of the battery racks 13 is a second liquid pipeline 334. The at least two temperature control systems 3 include the first temperature control system 31 and the second temperature control system 32. The energy storage system further includes the temperature control and distribution component 4. The temperature control and distribution component 4 is connected between the first temperature control system 31, the second temperature control system 32, the first liquid pipeline 333, and the second liquid pipeline 334. By controlling the temperature control and distribution component 4, the first temperature control system 31 may be adjusted to connect to the first liquid pipeline 333, or to connect to the second liquid pipeline 334, or to connect to both the first liquid pipeline 333 and the second liquid pipeline 334; and the second temperature control system 32 may be adjusted to connect to the first liquid pipeline 333, or to connect to the second liquid pipeline 334, or to connect to both the first liquid pipeline 333 and the second liquid pipeline 334.

In a specific embodiment, the temperature control system 3 in embodiments of this application may be a liquid cooling system, or may be an air cooling system. This is not limited in this application. It should be noted that the liquid cooling system and the air cooling system herein are mainly different in heat exchange manners. The liquid cooling system performs heat exchange by using liquid, and the air cooling system performs heat exchange by using air.

In the accompanying drawings in embodiments of this application, an example in which the temperature control system 3 is the liquid cooling system is used. When the temperature control system is the liquid cooling system, the temperature control system further includes a liquid pipeline 33 and a driving apparatus 34. The liquid pipeline 33 is in a heat conduction connection with a battery pack 11. A liquid working substance is transmitted in the liquid pipeline 33. The driving apparatus 34 is configured to drive the liquid working substance to flow in the liquid pipeline 33. In this case, the liquid pipeline 33 may exchange heat with the battery pack 11, to heat the battery pack 11 or cool the battery pack 11.

In a further embodiment, the liquid pipeline 33 in the heat conduction connection with each battery rack 1 is in the heat conduction connection with the battery pack 11 of the battery rack 1, and the liquid pipeline 33 may be further in a heat conduction connection with the power converter 2 to control a temperature of the corresponding power converter 2 connected to the battery rack 1. In other words, temperature control of the battery pack 11 of the battery rack 1 and the power converter 2 connected to the battery rack 1 may be implemented by using one temperature control system 3. This helps reduce a quantity of temperature control systems 3.

Still with reference to FIG. 3, in an embodiment, the liquid pipeline 33 connected to each battery rack 1 may include a first liquid branch 331 and a second liquid branch 332. The first liquid branch 331 is in a heat conduction connection with the battery pack 11, and the second liquid branch 332 is in a heat conduction connection with the power converter 2. The first liquid branch 331 and the second liquid branch 332 are separately connected to one driving apparatus 34. To be specific, one driving apparatus 34 is used to separately transmit the liquid working substance to the first liquid branch 331 and the second liquid branch 332, to separately dissipate heat for the battery pack 11 and the power converter 2. In specific implementation, the driving apparatus 34 may include a first liquid inlet 341, a first liquid outlet 342, a second liquid inlet 343, and a second liquid outlet 344. The first liquid branch 331 is connected between the first liquid inlet 341 and the first liquid outlet 342. The second liquid branch 332 is connected between the second liquid inlet 343 and the second liquid outlet 344. The first liquid branch 331 may be connected in series to a heat dissipation apparatus such as a condenser or a heat sink, to dissipate heat for the battery pack 11 having a relatively high heat dissipation requirement. The second liquid branch 332 does not need to be connected in series to an additional heat dissipation apparatus, or a serially connected heat dissipation apparatus has relatively low energy consumption. This solution helps reduce the costs and power consumption.

Still with reference to FIG. 5, in a possible embodiment, the liquid pipeline 33 in the heat conduction connection with the first part of the battery racks 12 is the first liquid pipeline 333, and the liquid pipeline 33 in the heat conduction connection with the second part of the battery racks 13 is the second liquid pipeline 334. The first temperature control system 31 includes a first driving apparatus 311, and the second temperature control system 32 includes a second driving apparatus 321. The temperature control and distribution component 4 is connected between the first driving apparatus 311, the second driving apparatus 321, the first liquid pipeline 333, and the second liquid pipeline 334. By controlling the temperature control and distribution component 4, the first driving apparatus 311 may be adjusted to connect to the first liquid pipeline 333, or connect to the second liquid pipeline 334, or connect to both the first liquid pipeline 333 and the second liquid pipeline 334; and the second driving apparatus 321 may be adjusted to connect to the first liquid pipeline 333, or connect to the second liquid pipeline 334, or connect to both the first liquid pipeline 333 and the second liquid pipeline 334.

In this embodiment, the cooling system in the energy storage system may have various working modes. For example, when the temperature control and distribution component 4 is in the first working state, the first driving apparatus 311 is connected to the first liquid pipeline 333, and the second driving apparatus 321 is connected to the second liquid pipeline 334. In other words, the first driving apparatus 311 and the second driving apparatus 321 work independently. Specifically, the first driving apparatus 311 is configured to control the temperature of the first part of the battery racks 12, and the second driving apparatus 321 is configured to control the temperature of the second part of the battery racks 13. When the temperature control and distribution component 4 is in the second working state, the first driving apparatus 311 is connected to the first liquid pipeline 333, and is further connected to the second liquid pipeline 334. For example, when the second driving apparatus 321 is faulty, the second driving apparatus 321 cannot control the temperature of the second part of the battery racks 13. In this case, the first driving apparatus 311 may be used to dissipate heat for both the first part of the battery racks 12 and the second part of the battery racks 13, to ensure normal working of the second part of the battery racks 13. When the temperature control and distribution component 4 is in the third working state, the second driving apparatus 321 is connected to the first liquid pipeline 333, and is further connected to the second liquid pipeline 334. For example, when the first driving apparatus 311 is faulty, the first driving apparatus 311 cannot control the temperature of the first part of the battery racks 12. In this case, the second driving apparatus 321 may be used to control the temperatures of both the first part of the battery racks 12 and the second part of the battery racks 13, to ensure that the first part of the battery racks 12 can also work normally. In this embodiment, even if a temperature control system 3 is faulty and cannot dissipate heat for a corresponding part of the battery racks 1, another temperature control system 3 may be used to satisfy heat dissipation of this part of the battery racks 1, to ensure normal working of this part of the battery racks 1, and ensure reliability of charging and discharging the energy storage system. Therefore, the energy storage system is not likely to stop working, thereby reducing losses caused due to shutdown.

In a specific embodiment, the temperature control and distribution component 4 may be a four-way valve, a valve group, or the like. This is not limited in this application provided that the foregoing objective can be achieved by controlling liquid passages.

With reference to FIG. 3 and FIG. 4, when the energy storage system is specifically disposed, the energy storage system includes a box 5. The battery packs 11 in the N battery racks 1 and the power converters 2 may be disposed in the box 5. The temperature control systems 3 may also be disposed in the box 5. Specifically, the box 5 may include a door plate 51 and a fixed wall 52. The door plate 51 may be rotatably disposed on the fixed wall 52. The at least two temperature control systems 3 are disposed on an inner side of the door plate 51, so that the temperature control systems 3 can move with rotation of the door plate 51. When the temperature control systems 3 need to be maintained, the door plate 51 may be opened for operation, thereby simplifying operation steps.

In another embodiment, a rotating support may be further disposed in the box, and the temperature control systems 3 is disposed on the rotating support. Specifically, the rotating support may be disposed near a door of the energy storage system. When the door of the energy storage system is opened, the rotating support may rotate from the door towards the outside of the energy storage system. This can also help maintain the temperature control systems 3.

In a specific technical solution, when the temperature control system in this embodiment of this application is the liquid cooling system, the driving apparatus of the liquid cooling system may include structures such as a liquid storage tank, a pump, a heat exchanger, a pipeline, and the like. The driving apparatus may be disposed on the door plate or the rotating support.

The energy storage system may further include a controller. This controller is connected to the power converters 2 and all the temperature control systems 3, and is configured to control working of the power converters 2 and the temperature control systems 3. In this solution, one controller can be used to control the entire energy storage system. This helps perform coordination and cooperation and reduce a quantity of controllers.

Based on a same inventive concept, this application further provides a power supply system. The power supply system includes the energy storage system in any one of the foregoing embodiments, and further includes a power distribution device. The power distribution device is electrically connected to the energy storage system. The power distribution device is further electrically connected to a user, and is configured to process electricity in the energy storage system and then distribute the processed electricity to the user for use. In this embodiment, the energy storage system in the power supply system uses different temperature control systems 3 to dissipate heat for different battery racks. This helps reduce power consumption of the temperature control systems and reduce energy waste. When a temperature control system is faulty, only normal working of a corresponding battery rack is affected, and a smaller quantity of battery racks are affected, thereby reducing losses.

In a specific embodiment, a specific form of the power supply system is not limited. For example, the power supply system may be a large power station, or a micro power station. The micro power station may be specifically located in an industrial park or a residential district. Alternatively, the power supply system may be a home power supply system or a power supply system of devices such as a vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, comprising N battery racks (1) and at least two temperature control systems (3), wherein
each battery rack (1) comprises a plurality of battery packs (11), the at least two temperature control systems (3) are configured to control temperatures of the N battery racks (1), there are two temperature control systems (3) in the at least two temperature control systems (3), the two temperature control systems (3) are configured to respectively control temperatures of two different battery racks of the N battery racks (1), and N is an integer greater than or equal to 2;
**characterized in that** the at least two temperature control systems (3) comprise N + 1 temperature control systems (3), N of the temperature control systems (3) are in a one-to-one correspondence with the N battery racks (1), and each temperature control system (3) is configured to control a temperature of a corresponding battery rack (1); and
N power converters connected to the N battery racks (1) are centrally disposed, and the N+1thtemperature control system (3) is configured to control temperatures of the N centrally disposed power converters.

2. The energy storage system according to claim 1, wherein the at least two temperature control systems (3) comprise a first temperature control system (3) and a second temperature control system (3), and the N battery racks (1) comprise a first part of battery racks (1) and a second part of battery racks (1); and
the energy storage system further comprises a temperature control and distribution component, the temperature control and distribution component is connected between the first temperature control system (3) and the second temperature control system (3), and when the temperature control and distribution component is in a first working state, the first temperature control system (3) is configured to control a temperature of the first part of battery racks (1), and the second temperature control system (3) is configured to control a temperature of the second part of battery racks (1); when the temperature control and distribution component is in a second working state, the first temperature control system (3) is configured to control temperatures of the first part of battery racks and the second part of battery racks (1); or when the temperature control and distribution component is in a third working state, the second temperature control system (3) is configured to control temperatures of the first part of battery racks and the second part of battery racks (1).

3. The energy storage system according to any one of claims 1 to 2, wherein the temperature control system (3) is a liquid cooling system or an air cooling system.

4. The energy storage system according to any one of claims 1 to 3, comprising a box, wherein the N battery racks are disposed in the box, the box comprises a door plate, and the at least two temperature control systems (3) are disposed on an inner side of the door plate.

5. The energy storage system according to any one of claims 1 to 4, comprising a box, wherein the N battery racks are disposed in the box, a rotating support is disposed in the box, and the at least two temperature control systems (3) are disposed on the rotating support.

6. A power supply system, comprising a power distribution device and at least one energy storage system according to any one of claims 1 to 5, wherein the power distribution device is electrically connected to the energy storage system.

## Patentansprüche

1. Energiespeichersystem, umfassend N Batterieracks (1) und mindestens zwei Temperatursteuerungssysteme (3), wobei
jedes Batterierack (1) eine Vielzahl von Batteriepaketen (11) umfasst, die mindestens zwei Temperatursteuerungssysteme (3) dazu konfiguriert sind, die Temperaturen der N Batterieracks (1) zu steuern, es zwei Temperatursteuerungssysteme (3) in den mindestens zwei Temperatursteuerungssystemen (3) gibt, die zwei Temperatursteuerungssysteme (3) dazu konfiguriert sind, jeweils die Temperaturen von zwei verschiedenen Batterieracks der N Batterieracks (1) zu steuern, und N eine ganze Zahl größer oder gleich 2 ist;
**dadurch gekennzeichnet, dass** die mindestens zwei Temperatursteuerungssysteme (3) N + 1 Temperatursteuerungssysteme (3) umfassen, wobei N der Temperatursteuerungssysteme (3) in einer Einszu-Eins-Entsprechung mit den N Batterieracks (1) stehen, und jedes Temperatursteuerungssystem (3) dazu konfiguriert ist, eine Temperatur eines entsprechenden Batterieracks (1) zu steuern; und
N Stromwandler, die mit den N Batterieracks (1) verbunden sind, zentral angeordnet sind und das N+1-te Temperatursteuerungssystem (3) dazu konfiguriert ist, die Temperaturen der N zentral angeordneten Stromwandler zu steuern.

2. Energiespeichersystem gemäß Anspruch 1, wobei die mindestens zwei Temperatursteuerungssysteme (3) ein erstes Temperatursteuerungssystem (3) und ein zweites Temperatursteuerungssystem (3) umfassen und die N Batterieracks (1) einen ersten Teil von Batterieracks (1) und einen zweiten Teil von Batterieracks (1) umfassen; und
das Energiespeichersystem ferner eine Temperatursteuerungs- und -verteilungskomponente umfasst, die Temperatursteuerungs- und - verteilungskomponente zwischen das erste Temperatursteuerungssystem (3) und das zweite Temperatursteuerungssystem (3) verbunden ist, und, wenn sich die Temperatursteuerungs- und -verteilungskomponente in einem ersten Betriebszustand befindet, das erste Temperatursteuerungssystem (3) dazu konfiguriert ist, eine Temperatur des ersten Teils von Batterieracks (1) zu steuern und das zweite Temperatursteuerungssystem (3) dazu konfiguriert ist, eine Temperatur des zweiten Teils von Batterieracks (1) zu steuern; wenn sich die Temperatursteuerungs- und verteilungskomponente in einem zweiten Betriebszustand befindet, das erste Temperatursteuerungssystem (3) dazu konfiguriert ist, die Temperaturen des ersten Teils von Batterieracks und des zweiten Teils von Batterieracks (1) zu steuern; oder, wenn sich die Temperatursteuerungs- und verteilungskomponente in einem dritten Betriebszustand befindet, das zweite Temperatursteuerungssystem (3) dazu konfiguriert ist, die Temperaturen des ersten Teils von Batterieracks und des zweiten Teils von Batterieracks (1) zu steuern.

3. Energiespeichersystem gemäß einem der Ansprüche 1 bis 2, wobei das Temperatursteuerungssystem (3) ein Flüssigkeitskühlsystem oder ein Luftkühlsystem ist.

4. Energiespeichersystem gemäß einem der Ansprüche 1 bis 3, umfassend ein Gehäuse, wobei die N Batterieracks in dem Gehäuse angeordnet sind, das Gehäuse eine Türplatte umfasst und die mindestens zwei Temperatursteuerungssysteme (3) an einer Innenseite der Türplatte angeordnet sind.

5. Energiespeichersystem gemäß einem der Ansprüche 1 bis 4, umfassend ein Gehäuse, wobei die N Batterieracks in dem Gehäuse angeordnet sind, ein Drehträger in dem Gehäuse angeordnet ist und die mindestens zwei Temperatursteuerungssysteme (3) auf dem Drehträger angeordnet sind.

6. Stromversorgungssystem, umfassend eine Stromverteilungsvorrichtung und mindestens ein Energiespeichersystem gemäß einem der Ansprüche 1 bis 5, wobei die Stromverteilungsvorrichtung elektrisch mit dem Energiespeichersystem verbunden ist.

## Revendications

1. Système de stockage d'énergie, comprenant N bâtis de batteries (1) et au moins deux systèmes de commande de température (3), dans lequel
chaque bâti de batterie (1) comprend une pluralité de blocs-batteries (11), les au moins deux systèmes de commande de température (3) sont configurés pour commander des températures des N bâtis de batterie (1), il existe deux systèmes de commande de température (3) dans les au moins deux systèmes de commande de température (3), les deux systèmes de commande de température (3) sont configurés pour commander respectivement les températures de deux bâtis de batterie différents des N bâtis de batterie (1), et N est un entier supérieur ou égal à 2 ;
**caractérisé en ce que** les au moins deux systèmes de commande de température (3) comprennent N + 1 systèmes de commande de température (3), N des systèmes de commande de température (3) sont en correspondance biunivoque avec les N bâtis de batterie (1), et chaque système de commande de température (3) est configuré pour commander la température d'un bâti de batterie (1) correspondant ; et
N convertisseurs de puissance connectés aux N bâtis de batterie (1) sont disposés de manière centrale, et le N + 1ième système de commande de température (3) est configuré pour commander les températures des N convertisseurs de puissance disposés de manière centrale.

2. Système de stockage d'énergie selon la revendication 1, dans lequel les au moins deux systèmes de commande de température (3) comprennent un premier système de commande de température (3) et un second système de commande de température (3), et les N bâtis de batterie (1) comprennent une première partie de bâtis de batterie (1) et une seconde partie de bâtis de batterie (1) ; et
le système de stockage d'énergie comprend également un composant de commande et de distribution de température, le composant de commande et de distribution de température est connecté entre le premier système de commande de température (3) et le second système de commande de température (3), et lorsque le composant de commande et de distribution de température est dans un premier état de fonctionnement, le premier système de commande de température (3) est configuré pour commander une température de la première partie des bâtis de batterie (1), et le second système de commande de température (3) est configuré pour commander une température de la seconde partie des bâtis de batterie (1) ; lorsque le composant de commande et de distribution de température est dans un deuxième état de fonctionnement, le premier système de commande de température (3) est configuré pour commander des températures de la première partie des bâtis de batterie et de la seconde partie des bâtis de batterie (1) ; ou lorsque le composant de commande et de distribution de température est dans un troisième état de fonctionnement, le second système de commande de température (3) est configuré pour commander des températures de la première partie des bâtis de batterie et de la seconde partie des bâtis de batterie (1).

3. Système de stockage d'énergie selon l'une quelconque des revendications 1 et 2, dans lequel le système de commande de température (3) est un système de refroidissement par liquide ou un système de refroidissement par air.

4. Système de stockage d'énergie selon l'une quelconque des revendications 1 à 3, comprenant un boîtier, dans lequel les N bâtis de batterie sont disposés dans le boîtier, le boîtier comprend une plaque de porte, et les au moins deux systèmes de commande de température (3) sont disposés sur un côté intérieur de la plaque de porte.

5. Système de stockage d'énergie selon l'une quelconque des revendications 1 à 4, comprenant un boîtier, dans lequel les N bâtis de batterie sont disposés dans le boîtier, un support rotatif est disposé dans le boîtier, et les au moins deux systèmes de commande de température (3) sont disposés sur le support rotatif.

6. Système d'alimentation électrique, comprenant un dispositif de distribution d'énergie et au moins un système de stockage d'énergie selon l'une quelconque des revendications 1 à 5, dans lequel le dispositif de distribution d'énergie est connecté électriquement au système de stockage d'énergie.
